Europäisches Patentamt

European Patent Office

Office européen des brevets

(19)

(11) Veröffentlichungsnummer: **0 030 700**
**B1**

(12) EUROPÄISCHE PATENTSCHRIFT

(45) Veröffentlichungstag der Patentschrift:
25.04.84

(21) Anmeldenummer: 80107742.1

(22) Anmeldetag: 09.12.80

(51) Int. Cl.³: **H 04 N 9/491,** H 04 N 5/91

(54) Anordnung zur Entzerrung eines unmodulierten Breitbandsignals, insbesondere eines FBAS-Videosignals, in einem Signal-Aufzeichnungs/Wiedergabe-System.

(30) Priorität: 17.12.79 DE 2950764

(43) Veröffentlichungstag der Anmeldung:
24.06.81 Patentblatt 81/25

(45) Bekanntmachung des Hinweises auf die Patenterteilung:
25.04.84 Patentblatt 84/17

(84) Benannte Vertragsstaaten:
AT BE CH DE FR GB IT LI NL SE

(56) Entgegenhaltungen:
DE - A - 2 828 586

GRUNDIG TECHNISCHE INFORMATIONEN, Band 25, Nr. 5, 1978, FÜRTH (DE), W. WÜRL "Ein neuer professioneller Videorecorder aus der GPR-Familie für hochzeilige Fernsehaufzeichnung mit erhöhter Bandbreite" Seiten 293 bis 299
NACHRICHTENTECHNIK, Band 22, Nr. 9, September 1972, VEB VERLAG TECHNIK, BERLIN (DE), H.J. WEIGEL "Einige Eigenschaften des FM Systems magnetischer Video speichergeräte", Seiten 294 bis 296

(73) Patentinhaber: BASF Aktiengesellschaft,
Carl-Bosch-Strasse 38, D-6700 Ludwigshafen (DE)

(72) Erfinder: Ilmer, Andreas, Dr., Londoner Ring 15,
D-6700 Ludwigshafen (DE)

## Anordnung zur Entzerrung eines unmodulierten Breitbandsignals, insbesondere eines FBAS-Videosignals, in einem Signal-Aufzeichnungs/Wiedergabe-System

Die Erfindung betrifft eine Anordnung zur Entzerrung eines unmodulierten Breitbandsignals, insbesondere eines FBAS-Videosignals, in einem Signal-Aufzeichnungs/Wiedergabesystem, in dem das Breitbandsignal über einen Frequenzmodulator einer Aufzeichnungs-Wiedergabeeinheit zugeführt und aufgezeichnet wird und das Wiedergabesignal über einen Frequenzmodulator in ein unmoduliertes Breitbandsignal rückumgesetzt wird und in dem das Breitbandsignal vor der Frequenzmodulation und nach der Frequenzdemodulation einem Preemphasis- bzw. Deemphasisfilter zur Signalentzerrung zugeführt wird, wobei das Preemphasis-Filter einen Überhöhungsfaktor »ü« besitzt.

Die Preemphasis-/Deemphasis-Technik wird zur Verbesserung des Störabstandes angewendet.

Bei Verwendung einer konventionellen Preemphasis-Schaltung vor dem Frequenzmodulator ist der Größe der einzustellenden Preemphasis (Signalanhebung der hohen Frequenzen) eine Grenze dadurch gesetzt, daß die maximale frequenzmodulierte Momentanfrequenz am Frequenzmodulator-Ausgang innerhalb des Aufzeichnungsbereichs des Aufzeichnungsträgers liegen und die minimale Frequenz gerade keine Moiré durch Signalspiegelung des frequenzmodulierten Signals an der Nullinie erzeugen soll. Sonstige Störungen, die den Störabstands-Gewinn wieder verringern, sollen ebenfalls vermieden sein.

Mit den Grundig Techn. Informationen, Bd. 25, Nr. 5, 1978, Seiten 293 bis 299, ist nur im Wiedergabekanal eines professionellen Videorecorders, kurz GPR-Rekorders, ein Allpaß vorgesehen, der im Bereich des trägerfrequenten Videosignals in Richtung zum Videoausgang des GPR-Rekorders gesehen, vor dem Frequenz-Demodulator und dem Deemphasis-Filter liegt. Dieser Allpaß dient zum Ausgleich von Phasenfehlern, die durch Filter und einen selbstschwingenden Begrenzerverstärker entstehen.

Es ist auch grundsätzlich bekannt, Einschwingvorgänge, die auf Phasenverzerrungen eines Signals beruhen, durch Phasenentzerrfilter abzukürzen bzw. symmetrisch zu machen (z. B. Rundfunktechnische Mitteilungen, Jahrgang 1, 1957, S. 151 bis 158). Der Schaltungsaufwand ist infolge der großen Zahl und der erforderlichen Präzision der benötigten Bauelemente außerordentlich groß, deshalb sind derartige Schaltungen, insbesondere für Heimvideoanwendungen, bisher nicht einsetzbar.

Es ist Aufgabe der vorliegenden Erfindung, den Störabstand ohne eine Übersteuerung des Signalübertragungskanals weiter zu vergrößern.

Die Aufgabe wird mit einer Anordnung zur Entzerrung eines Breitband-Signals der eingangs definierten Art erfindungsgemäß dadurch gelöst, daß vor dem Preemphasis-Filter bzw. hinter dem Deemphasis-Filter je eine Gruppenlaufzeit-Entzerrungs-Schaltung für den Frequenzbereich des unmodulierten Breitbandsignals vorgesehen ist, wodurch Signalsprünge am Ausgang des Preemphasis-Filters, insbesondere Schwarz/Weiß- oder Weiß/Schwarz-Signalsprünge, symmetrierbar werden und wodurch ein größerer Überhöhungsfaktor »üG« (üG)ü für das Preemphasis-Filter erzeugbar wird, der durch den Übertragungs-Frequenzbereich des Aufzeichnungs/Wiedergabegeräts bestimmt wird.

Damit wird erreicht, daß das jeweilige Breitband- bzw. FBAS-Videosignal in eine Signalform gebracht wird, die eine höhere Preemphasis-Anhebung ohne die Gefahr einer Übersteuerung des Magnetbandes ermöglicht. Dadurch wird die Erfindung besonders vorteilhaft für Schmalband-Video-Aufzeichnungs-/Wiedergabesysteme verwendbar.

Als weiterer Vorteil wird angesehen, daß außer dem Störabstands-Gewinn eine Verbesserung der Signalauflösung erreicht wird.

Zweckmäßig ist die Schaltung zur Gruppenlaufzeitentzerrung ein Allpaß, der mindestens eine im wesentlichen symmetrische Transistorstufe mit zwischen Emitter und Kollektor liegender Brückenschaltung aus Blind- und Wirkwiderstand umfassen kann. Damit wird gegenüber bekannten Schaltungen eine sehr einfache Schaltung ermöglicht.

Praktisch ist die Gruppenlaufzeit-Entzerrung des Allpasses über den gesamten Übertragungsbereich das Aufzeichnungs-/Wiedergabesystems, insbesondere bei Videosystemen von 0 bis 3 MHZ wirksam ist.

Der Allpaß besteht vorteilhafterweise im wesentlichen aus einer Reihenschaltung mehrerer LC-Parallelglieder als Blindwiderstand und einem Wirkwiderstand. Dabei sind handelsübliche Bauelemente verwendbar.

In weiterer Ausgestaltung der Erfindung ist die benutzte Preemphasis-(Deemphasis-)Schaltung eine Preemphasis-(Deemphasis-)Schaltung zweiter der Ordnung mit vorgegebener, aus den Patentansprüchen ersichtlicher Übertragungsfunktion.

Damit wird der Vorteil erhalten, die Allpässe mit minimalem Schaltungsaufwand realisieren zu können.

Es ist ferner vorteilhaft, in den A/W-Kanälen sowieso vorhandene Filterstufen ebenfalls in die Gruppenlaufzeit-Entzerrungs-Charakteristik einzubeziehen. Zweckmäßig ist es auch, die Verzögerung des Allpasses derjenigen üblicher Laufzeitausgleichsglieder, die z. B. für den Laufzeitausgleich zwischen Farb- und Helligkeitssignal verwendet werden, anzupassen. Dadurch können solche Laufzeitausgleichs-Verzögerungsglieder eingespart werden.

Bei der Magnet-Aufzeichnung von Breitband-Signalen, insbesondere von Videosignalen, wird zur Verbesserung des Störabstands eine Preemphasis-Technik angewendet, d. h. es werden die im Signal enthaltenen höherfrequenten Spektralanteile im Signalpegel angehoben gemäß einer vorgegebenen Frequenzgangcharakteristik mit folgenden Kennwerten. Die obere Grenze ist die Grenzfrequenz (fg z. B. 3 MHz) des Übertragungskanals z. B. des Video-Magnetbandes. Das Preemphasis-Filter wird durch die Eckfrequenzen f1 und f2 (z. B. 250 KHz und 900 KHz) und den Überhöhungsfaktor Ü (z. B. 3,5) bestimmt. Der Amplitudenfrequenzgang hat unterhalb von $f_1$ einen konstanten Wert, steigt zwischen $f_1$ und $f_2$ kontinuierlich um den Faktor Ü an und bleibt oberhalb von $f_2$ wieder konstant. Da bei konventionellen Preemphasisfiltern der Anstieg zwischen $f_1$ und $f_2$ linear erfolgt, gilt in diesem Fall $Ü = f_2/f_1$. Die in Klammern angegebenen Werte entsprechen praktischen Anwendungsfällen. Die erzielte Störabstandsverbesserung wächst näherungsweise proportional mit dem Faktor Ü, dessen Erhöhung jedoch, wie im folgenden erläutert, Grenzen gesetzt sind.

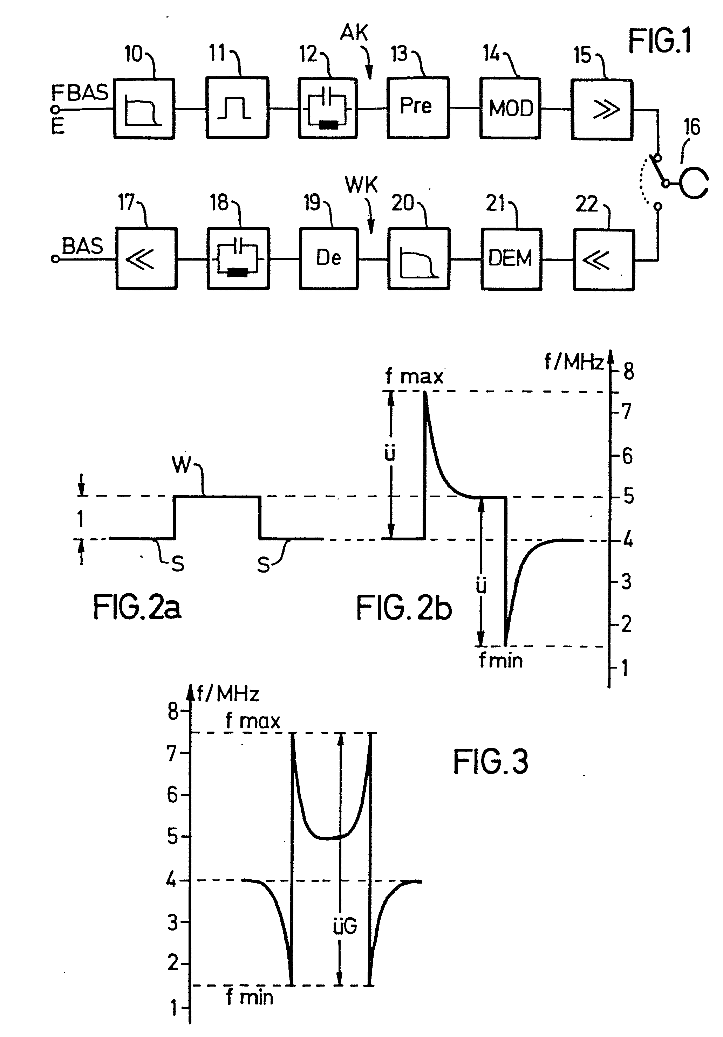

Der hierbei kritische Fall liegt vor, wenn das Fernsehbild Schwarz/Weiß-Sprünge bzw. Weiß/Schwarz-Kanten aufweist gemäß Fig. 2a, 2b und 3.

Ein Ausführungsbeispiel einer erfindungsgemäßen Anordnung ist im folgenden erläutert und in der Zeichnung dargestellt.

Die Figuren zeigen in

Fig. 1 ein Blockschaltbild eines Aufzeichnungs/Wiedergabekanals eines Magnetaufzeichnungssystems,

Fig. 2a und 2b den Signalverlauf eines Schwarz/Weiß-Sprungs bei einer herkömmlichen Preemphasis-Schaltung,

Fig. 3 den Signalverlauf, der über die Gruppenlaufzeit-Entzerrung gemäß der Erfindung erreicht wird,

Fig. 4a bis 4d Charakteristische Amplituden- und Gruppenlaufzeit-Frequenzgang-Kurvenverläufe von Preemphasis- und Deemphasisfiltern einschließlich ihrer Frequenzband-Begrenzungsfilter,

Fig. 5 ein Schaltbild eines Preemphasis-Filters,

Fig. 6 eine Prinzipschaltung einer Entzerrerstufe im Aufzeichnungskanal gemäß Fig. 1,

Fig. 7 ein Schaltbild eines Deemphasis-Filters.

Der Verlauf des Schwarz/Weiß-Sprungs ist in Fig. 2a dargestellt, während Fig. 2b den dazugehörigen Signalverlauf hinter einem üblichen Preemphasisfilter zeigt.

Durch das Preemphasisfilter werden die im Signal auftretenden Sprünge etwa um den Faktor Ü asymmetrisch vergrößert. Anschließend wird im FM-Modulator der Kurvenverlauf gemäß Fig. 2b in eine zeitlich veränderliche Momentanfrequenz umgewandelt, z. B. gemäß der in Fig. 2b und 3 vorgesehenen Frequenzachse. Der zulässige Überhöhungsfaktor Ü ergibt sich daraus unmittelbar durch die maximal bzw. minimal zu tolerierenden Frequenzen, wobei $f_{max}$ die maximal über den Übertragungskanal zu übertragende Frequenz ist (bei Magnetband die höchste noch aufzuzeichnende und wiederzugebende Frequenz) (in Fig. 2b und 3, z. B. 7,5 MHz), und f min durch die zulässigen Interferenzstörungen gegeben ist, die mit abnehmender Frequenz f min zunehmen.

Durch Verwendung einer Gruppenlaufzeitenzerrung zusätzlich zum üblichen Preemphasisfilter können die Kanten des Schwarz/Weiß-Sprungs aus Fig. 2a, wie in Fig. 3 dargestellt, erfindungsgemäß symmetriert werden. Dadurch wird es überraschenderweise möglich, unter Beibehaltung der zulässigen Frequenzgrenzen f max und f min den Überhöhungsfaktor Ü auf $Ü_G$ zu vergrößern.

Aus den Fig. 2b und 3 ergibt sich als Zusammenhang zwischen Ü und $Ü_G$

$$Ü_G = 2Ü - 1$$

Setzt man den oben erwähnten Wert von 3,5 für Ü ein, so ergibt sich ein $Ü_G$ von 6 und ein Faktor $Ü_G/Ü$ von 1,7 entsprechend 4,6 dB; praktisch wird ein Wert von 4,0 bis 4,3 dB gemessen, was eine außerordentlich große Störabstands-Vergrößerung ist. Außerdem wird durch Verwendung der Gruppenlaufzeit-Entzerrung bei gegebener Signalbandbreite eine maximale Bildschärfe und eine Verminderung des Signalüberschwingens erreicht.

Um die in Fig. 3 dargestellte symmetrische Kurvencharakteristik zu erreichen, ist es notwendig, daß die Gruppenlaufzeit-Entzerrung in über die gesamte Signalbandbreite (bei Videoaufzeichnung auf Magnetband von 0 bis 3 MHz) wirksam ist. Eine entsprechende Entzerrung des Deemphasisfilters ist ebenfalls notwendig.

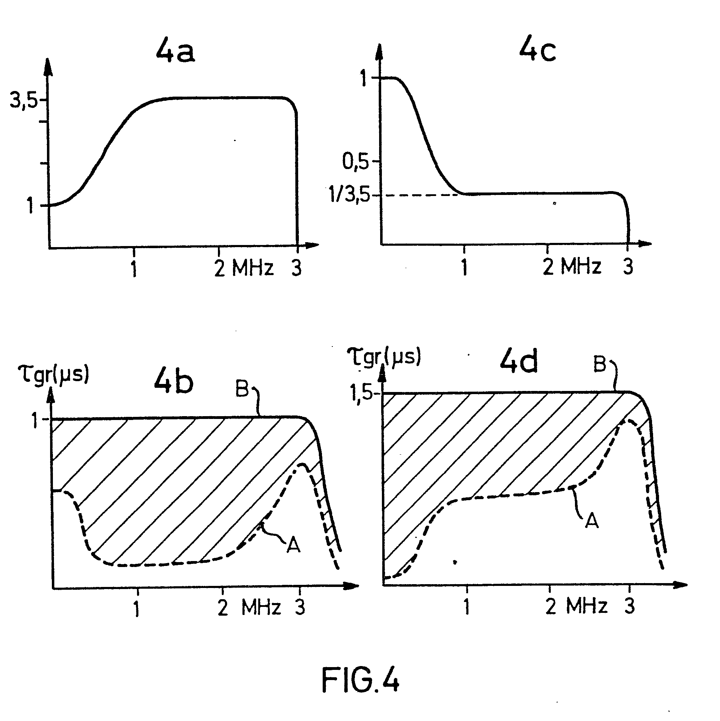

In Fig. 4 sind die Amplituden- und Gruppenlaufzeit-Charakteristiken für Pre- und Deemphasisfilter unter Einbezug des jeweiligen Eingangs- bzw. Ausgangstiefpasses dargestellt und zwar ohne Entzerrung (A) und mit Entzerrung (B) gemäß vorliegender Erfindung. Es zeigt

Fig. 4a die Amplitudencharakteristik des Preemphasisfilters,

Fig. 4c die Amplitudencharakteristik des Deemphasisfilters,

Fig. 4b die Gruppenlaufzeit-Charakteristik des Preemphasisfilters und

Fig. 4d die Gruppenlaufzeit-Charakteristik des Deemphasisfilters.

Die Allpässe, die zur Gruppenlaufzeit-Entzerrung verwandt werden, müssen so ausgelegt sein, daß die in Fig. 4b und d dargestellten Flächen (schraffiert) zwischen den Kurven A und B aufgefüllt werden.

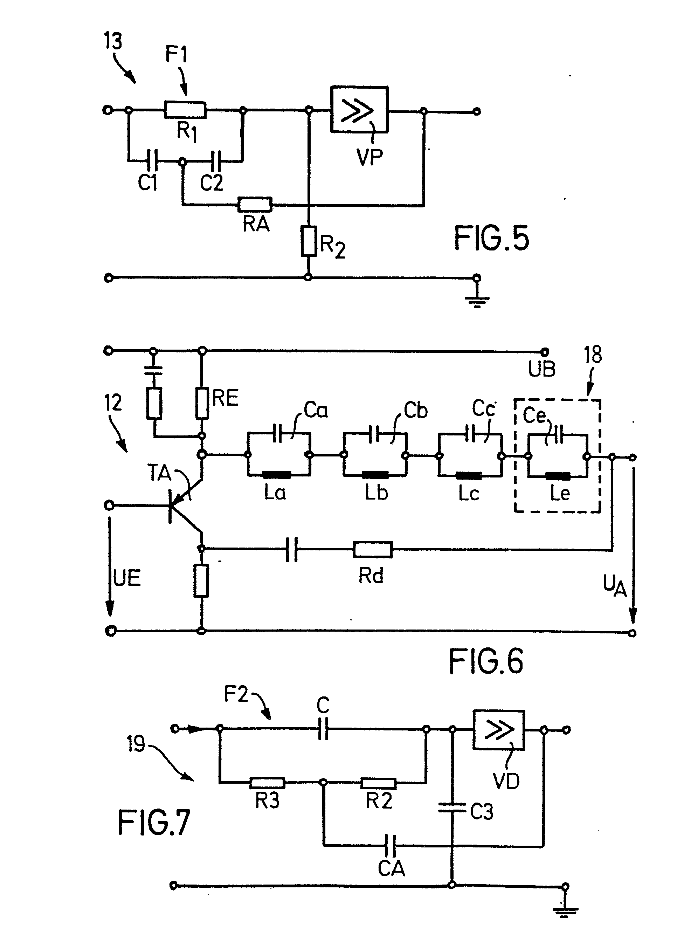

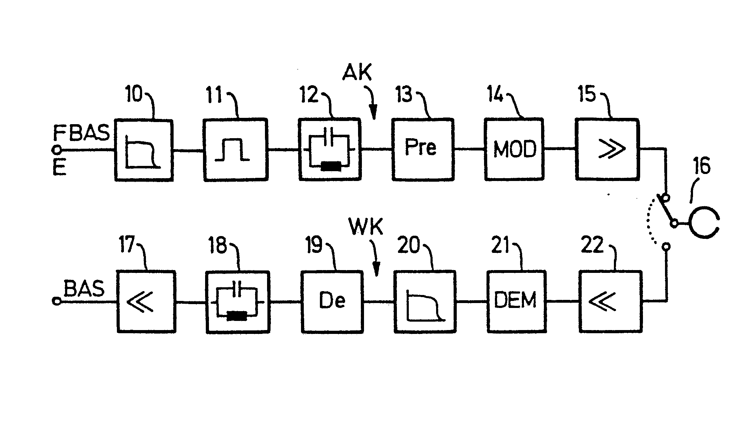

Das Blockschaltbild in Fig. 1 für den Kanal des Luminanzsignals in einem Aufzeichnungs-Wiedergabesystem für Videosignale zeigt eine Ausführung einer Schaltungsanordnung. Detailschaltungen der Filter-Anordnung sind in Fig. 5–7 gezeigt.

Das Blockschaltbild des Luminanz-Aufzeichnungskanals AK, beispielsweise eines Magnetband-Aufzeichnungs/Wiedergabe-Geräts (im folgenden als A/W-Gerät bezeichnet) enthält von der Eingangsklemme E, wo ein FBAS-Videosignal ansteht, prinzipiell die Blöcke 10 bis 15. Der Wiedergabekanal WK umfaßt die Blöcke 17 bis 22 und zwischen den Kanälen AK und WK ist ein Aufnahme/Wiedergabe-Magnetkopf (A/W-Kopf) 16 umschaltbar.

Auf die E-Klemme in AK-Kanal folgt ein Tiefpaß 10, der das Videosignal (mit oder ohne Farbanteil) frequenzmäßig auf Frequenzen unter z. B. 3 MHz begrenzt (zum Entfernen des Farbsignals) — sowie eine Klemmstufe 11, die das Videosignal gleichspannungsmäßig in die für den FM-Modulator 14 richtige Lage bringt. Daran schließt sich die Entzerrerstufe als Allpaß 12 an, der durch Induktivitäten und Kapazitäten sowie einen ohmschen Widerstand Rd gekennzeichnet ist und der die Gruppenlaufzeit-Entzerrung bewirkt. Eine genauere Beschreibung ist weiter unten gegeben. Am Ausgang der Entzerrerstufe 12 schließt sich ein Preemphasis-Filter 13 an, das zweckmäßig ein Preemphasis-Filter zweiten Grades mit einer Übertragungsfunktion der Form

$$F_{Pre}(p) = KP \; \frac{1 + 2 D_1 \, (p/W_1 + p/W_1)^2}{1 + 2 D_2 \, (p/W_2 + p/W_2)^2}$$

(1)

ist. Hier und unten bedeutet $W = \omega$.
Darin bedeuten

KP       Konstanter Faktor,
$D_1, D_2$     Dämpfungsfaktoren,
$p = jW$     Komplexe Kreisfrequenz,
$W_1 \, 2\pi f_1$⎫   $f_1$ und $f_2$ sind die obenerwähnten Eck-
$W_2 \, 2\pi f_2$⎭   frequenzen.

Außerdem enthält der Aufzeichnungskanal AK noch einen Modulator 14 z. B. einen Frequenzmodulator und einen Aufsprechverstärker 15. Im Wiedergabekanal WK ist vom A/W-Kopf 16 aus ein Vorverstärker 22, ein der Art des Modulators 14 entsprechender Demodulator 21, ein 3-MHz-Tiefpaß 20, ein Deemphasis-Filter 19, das die reziproke Übertragungsfunktion des Preemphasis-Filters gemäß Gleichung (1) besitzt — $D_1$ und $D_2$ sowie $W_1$ und $W_2$ sind darin in ihrer Stellung vertauscht — eine Entzerrerstufe, Allpaß 18, zur Entzerrung des Wiedergabesignals sowie ein Ausgangsverstärker 17 vorgesehen, der das Videosignal BAS (je nachdem mit oder ohne Farbanteil) zur Bildwiedergabe bereitstellt. In den Kanälen AK und WK ist die Reihenfolge der Blöcke 10, 12 und 13 bzw. 18 bis 20 theoretisch beliebig.

Der Allpaß 12 entzerrt die Filter 10 und 13 in der Gruppenlaufzeit, während der Allpaß 18 die Filter 19 und 20 entzerrt.

Die Tiefpässe 10 und 20 bestehen zweckmäßig aus geeigneten $\pi$-Gliedern, in denen das Längsglied ein LC-Parallelglied ist und die Querglieder Kondensatoren sind.

Gemäß Fig. 5 ist das Preemphasis-Filter 13 eine Verstärkerstufe $V_P$ mit einer frequenzabhängigen Eingangsstufe F1, bestehend aus einer RC-Kombination mit symmetrischem Abgriff, der mit dem Ausgang des Verstärkers $V_P$ verbunden ist. Die Eingangsstufe F1 besteht aus der Parallelschaltung des Widerstandes R1 mit der Reihenschaltung der gleichgroßen Kondensatoren C1 und C2, sowie dem Widerstand $R_A$, der symmetrisch zwischen C1 und C2 angeschlossen ist und zum Ausgang der Stufe $V_P$ führt. Die Eingangsstufe F1 erzeugt im wesentlichen den gruppenlaufzeit- und amplitudenabhängigen Signalverlauf der Fig. 4b bzw. 4a und ist im übrigen entsprechend zu dimensionieren.

Während das Preemphasis-Filter 13 die hohen Signalfrequenzen z. B. zwischen 875 KHz und 3 MHz gemäß Fig. 4a linear anheben soll, ist mit dem Deemphasis-Filter 19 eine entsprechende Signalabsenkung beabsichtigt, so daß das Signal unverzerrt aber mit größerem Störabstand wiedergebbar wird. Das Deemphasis-Filter 19 muß daher im Hinblick auf die Eingangsstufe F1 eine komplementär aufgebaute Eingangsstufe F2 enthalten. Darin besteht die Parallelschaltung aus einem Kondensator C und einer Reihenschaltung von Widerständen R3 und R2, zwischen denen ein Kondensator $C_A$ angeschlossen ist, der zum Emitter einer im wesentlichen gleich der Stufe $V_P$ dimensionierten Verstärkerstufe $V_D$ führt.

Der Allpaß 12 kann wie dargestellt, zweckmäßig auf die Klemmstufe 11 folgen, sollte jedoch dem Preemphasis-Filter 13 vorgeschaltet sein. Solche Allpässe 12 bestehen aus mindestens einem LC-Glied in Parallelschaltung und einem ohmschen Widerstand Rd, im allgemeinen enthalten sie eine Mehrzahl von LC-Parallelgliedern wie z. B. aus Fig. 6 ersichtlich. Ein Allpaß kann auch aus mindestens zwei LC-Parallelgliedern und deren Ein- und Ausgänge überkreuz verbindenden LC-Reihenschaltungen, also mindestens aus einer sogenannten X-Schaltung bestehen. In Fig. 6 enthält die Entzerrer-Anordnung (Allpaß) eine im wesentlichen symmetrische Transistorstufe $T_A$ und die mit dem Emitter verbundene Reaktanz/Impedanz-Brücke zwischen Emitter- und Kollektor. Hierbei besteht die Brücke aus der Reihenschaltung der drei Parallelglieder La//Ca, Lb//Cb und Lc//Cc, sowie aus dem mit dem Kollektor über einen Koppelkondensator verbundenen Widerstand Rd. Der Emitterwiderstand RE kann zweckmäßig zur Einebnung des Amplitudenfrequenzganges durch eine weitere RC-Reihenschaltung überbrückt sein.

Werden der Preemphasis-Filter 13 gemäß Fig. 5 und der Allpaß 12 gemäß Fig. 6 geeignet angepaßt zusammengeschaltet, so wird das Sprungverhalten gemäß Fig. 3 bei einem Schwarzweißsprung gemäß Fig. 2a, sowie die Amplituden-Charakteristik gemäß Fig. 4a und die Gruppenlaufzeit-Charakteristik gemäß Fig. 4b erreicht.

Das Deemphasis-Filter 19 zeigt die Schaltung in Fig. 7, die im wesentlichen Schaltung in Fig. 5 entspricht, mit Ausnahme der Eingangsstufe F2 in Fig. 7. Die Entzerrerstufe im Wiedergabekanal WK, Allpaß 18, entspricht prinzipiell ebenfalls dem Allpaß 12 in Fig. 6, mit der Ausnahme eines gestrichelt umrahmten weiteren Parallelgliedes $C_e//L_e$, das an das letzte Glied $C_c//L_c$ anzuhängen ist. Im Falle des Allpasses 12 ist $R_d$ selbstverständlich mit dem Ausgang des Gliedes $C_c//L_c$ verbunden. Die Kapazitäts- und Induktivitätswerte der CL-Glieder im Allpaß 18 sind jedoch verschieden von denen in der Stufe 12. Die Zahl der Reaktanzglieder richtet sich nach der gewünschten Annäherung der Welligkeit an die Kurve B in Fig. 4. Die geeignete Dimensionierung erfolgt abhängig von den obenerwähnten Kennwerten solcher Schaltungen und von den Frequenzkennwerten des benutzten Aufzeichnungs-/Wiedergabesystems. Es können handelsübliche Kondensatoren und Spulen benutzt werden.

In Fig. 4b und 4d ist deutlich erkennbar, daß die Entzerrerstufen im Hinblick auf die Gruppenlaufzeit-Entzerrung für Preemphasis und Deemphasis verschieden ausgelegt sein müssen. Im Preemphasis-Fall (Fig. 4b) wird der Wert der Gruppenlaufzeitkonstanten auf z. B. $\tau$ gr $= 1\ \mu$ sec und im Deemphasis-Fall (Fig. 4d) auf z. B. $\tau$ gr $= 1,5\ \mu$s eingestellt. Im beschriebenen Fall sind die Tiefpässe 10 und 20 im Hinblick auf ihre Gruppenlaufzeit-Entzerrung in den die Allpässe 12 bzw. 18 einbezogen.

Eine der beschriebenen Schaltung entsprechende Anordnung wurde im Versuch mit einer konventionellen Anordnung ohne Gruppenlaufzeitentzerrung verglichen. Im Ergebnis wurde die theoretisch erwartete Störabstandsverbesserung von mehr als 4,0 dB praktisch bestätigt. Der für die Allpässe erforderliche Mehraufwand der Schaltungen wird im wesentlichen dadurch ausgeglichen, daß die sonst notwendigen Laufzeitglieder mittels der die unterschiedliche Laufzeit zwischen Chrominanz- und Luminanzkanal angepaßt wird, im Fortfall kommen können, da diese Funktionen von den Allpässen mit übernommen wird.

Die Auflösung des wiedergegebenen Videosignals wurde in der Praxis, um das 1,3- bis 1,5fache verbessert, bezogen auf die Anstiegszeit eines Schwarz/Weiß-Sprungs. Bei 3 MHz wurde eine Verbesserung auf das Doppelte gemessen.

### Patentansprüche

1. Anordnung zur Entzerrung eines unmodulierten Breitbandsignals, insbesondere eines FBAS-Videosignals, in einem Signal-Aufzeichnungs/Wiedergabesystem, in dem das Breitbandsignal über einen Frequenzmodulator (14) einer Aufzeichnungs-Wiedergabeeinheit (16) zugeführt und aufgezeichnet wird und das Wiedergabesignal über einen Frequenzdemodulator (21) in ein unmoduliertes Breitbandsignal rückumgesetzt wird und in dem das Breitbandsignal vor der Frequenzmodulation und nach der Frequenzdemodulation einem Preemphasis- bzw. Deemphasisfilter (13 bzw. 19) zur Signalentzerrung zugeführt wird, wobei das Preemphasis-Filter einen Überhöhungsfaktor »ü« besitzt, dadurch gekennzeichnet, daß vor dem Preemphasis-Filter (13) bzw. hinter dem Deemphasis-Filter (19) je eine Gruppenlaufzeit-Entzerrungs-Schaltung (12 bzw. 18) für den Frequenzbereich des unmodulierten Breitbandsignals vorgesehen ist, wodurch Signalsprünge am Ausgang des Preemphasis-Filters (13), insbesondere Schwarz/Weiß- oder Weiß/Schwarz-Signalsprünge, symmetrierbar werden (Fig. 3) und wodurch ein größerer Überhöhungsfaktor »üG« (üG)ü) für das Preemphasis-Filter (13) erzeugbar wird, der durch den Übertragungs-Frequenzbereich (f max bis f min in Fig. 2 und 3) des Aufzeichnungs/Wiedergabegeräts (16) bestimmt wird.

2. Anordnung nach Anspruch 1, dadurch gekennzeichnet, daß die Schaltung zur Gruppenlaufzeit-Entzerrung ein Allpaß (12, 18) ist.

3. Anordnung nach Ansprüchen 1 und 2, dadurch gekennzeichnet, daß als Allpaß (12, 18) mindestens eine im wesentliche symmetrische Transistorstufe (TA) mit zwischen Emitter- und Kollektor liegender Brückenschaltung aus Blind- und Wirkwiderstand (C, L und R) vorgesehen ist.

4. Anordnung nach Ansprüchen 1 bis 3, dadurch gekennzeichnet, daß die Gruppenlaufzeit-Entzerrung des Allpasses (12, 18) über den gesamten Übertragungsbereich des Signal-Aufzeichnungs/Wiedergabesystems, insbesondere von 0 bis 3 MHz, wirksam ist.

5. Anordnung nach Ansprüchen 1 bis 4, dadurch gekennzeichnet, daß der Allpaß (12, 18) im wesentlichen aus einer Reihenschaltung mehrerer LC-Parallelglieder Ca/La; CbLb, CcLc, CeLe) als Blindwiderstände und einen Wirkwiderstand (Rd) gebildet ist.

6. Anordnung nach einem oder mehreren der Ansprüche 1 bis 5, dadurch gekennzeichnet, daß die Preemphasis-(Deemphasis-)-Schaltungen eine Übertragungsfunktion gemäß folgender Gleichung aufweisen:

$$F_{P(D)}(p) = K_{P(D)}\ \frac{1 + 2 D_{1(2)}\dfrac{P}{W\,1\,(2)} + \left(\dfrac{p}{W\,1\,(2)}\right)^2}{1 + 2 D_{2(1)}\dfrac{p}{W\,2\,(1)} + \left(\dfrac{p}{W\,2\,(1)}\right)^2}$$

worin

$F_{P(D)}(p)$   die Übertragungsfunktion,
$K_{P(D)}$      eine Konstante,
$D_1, D_2$    Dämpfungsfaktoren,
$W_1, W_2$   die Kreisfrequenzen der Eckfrequenzen $f_1$ und $f_2$.

sind

7. Anordnung nach einem oder mehreren der Ansprüche 1 bis 6, dadurch gekennzeichnet, daß im Aufzeichnungs-(AK) und Widergabekanal-(WK) vorgesehene Filterstufen zumindest teilweise in die Schaltung zur Gruppenlaufzeit-Entzerrung (12, 18) einbezogen sind.

8. Anordnung nach einem oder mehreren der Ansprüche 1 bis 7, dadurch gekennzeichnet, daß die Schaltung zur Gruppenlaufzeit-Entzerrung (12, 18) eine Signalverzögerung von einer Verzögerungsdauer bewirkt, die derjenigen üblicher Verzögerungsglieder für den Laufzeitausgleich, insbesondere zwischen voneinander getrennten Farb- und Helligkeitssignalen, entspricht.

## Claims

1. An arrangement for equalizing an unmodulated wide-band signal, particularly a composite color video signal, in a signal recording/playback system in which the wide-band signal is supplied to recording/playback means (16) via a frequency modulator (14) and is recorded, and the playback signal is converted back into an unmodulated wide-band signal by means of a frequency demodulator (21), and in which the wide-band signal is supplied to a pre-emphasis filter (13) prior to frequency modulation, and to a de-emphasis filter (19) after frequency demodulation, for the purpose of signal equalization, the pre-emphasis filter having an emphasizing factor »ü«, wherein group-delay equalization circuits (12) and (18) are provided before the pre-emphasis filter (13) and behind the de-emphasis filter (19) respectively, equalization being effective over the frequency range of the unmodulated wide-band signal, by means of which circuits transitions in the signal at the ouput of the pre-emphasis filter (13), especially black/white transitions and white/black transitions, can be made symmetrical (Fig. 3), and by means of which circuits a bigger emphasizing factor »üG« (üG ü) can be obtained for the pre-emphasis filter (13), the said factor being determined by the frequency range (f max to f min in Fig. 2 and 3) that can be transmitted by the recording playback apparatus (16).

2. An arrangement as claimed in claim 1, wherein the circuits for group-delay equalization are all-pass filters (12, 18).

3. An arrangement as claimed in claims 1 and 2, wherein each all-pass filter (12, 18) consists of at least one substantially symmetrical transistor stage (TA) provided with a bridge circuit consisting of reactive impedance and ohmic resistance (C, L and R) and located between emitter and collector.

4. An arrangement as claimed in claims 1 to 3, wherein the group-delay equalization of the all-pass filters (12, 18) is effective over the entire transmission range of the signal recording/playback system, particularly from 0 to 3 MHz.

5. An arrangement as claimed in claims 1 to 4, wherein each all-pass filter (12, 18) consists essentially of several series-connected parallel LC sections (CaLa; CbLb; CcLc; CeLe) as the reactive impedances and of one ohmic resistance (Rd).

6. An arrangement as claimed in one or more of claims 1 to 5, wherein the pre-emphasis (de-emphasis) circuits exhibit a transfer function which conforms to the following equation:

$$F_{P(D)}(p) = K_{P(D)} \frac{1 + 2D_{1(2)}\dfrac{P}{\omega 1(2)} + \left[\dfrac{p}{\omega 1(2)}\right]^2}{1 + 2D_{2(1)}\dfrac{p}{\omega 2(1)} + \left[\dfrac{p}{\omega 2(1)}\right]^2}$$

where

$F_{P(D)}(p)$   is the transfer function,
$K_{P(D)}$   is a constant,
$D_1, D_2$   are damping factors, and
$\omega_1, \omega_2$   are the angular frequencies of the cut-off frequencies $f_1$ and $f_2$.

7. An arrangement as claimed in one or more of claims 1 to 6, wherein filter stages provided in the recording and playback channels (AK and WK respectively) are included at least partially in the circuits for group-delay equalization (12, 18).

8. An arrangement as claimed in one or more of claims 1 to 7, wherein the circuits for group-delay equalization (12, 18) cause a signal delay of a duration corresponding to that of conventional delay means for equalization of the delay in time, particularly between separate chominance and luminance signals.

## Revendications

1. Dispositif pour la correction d'un signal à large bande, non modulé, en particulier un signal vidéo couleur, dans un système d'enregistrement/reproduction de signal, dans lequel le signal à large bande est amené, et enregistré, par l'intermédiaire d'un modulateur de fréquence (14), à une unité d'enregistrement/reproduction (16) et le signal reproduit est retransformé par l'intermédiaire d'un démodulateur de fréquence (21) en un signal à large bande non modulé, et dans lequel le signal à large bande, avant la modulation de fréquence et après la démodulation de fréquence, est amené à un filtre de pré-accentuation ou désaccentuation (13 ou 19) pour correction du signal, le filtre de pré-accentuation possèdant un facteur de relevage »ü«, caractérisé par le fait qu'avant le filtre de pré-accentuation (13) ou après le filtre de désaccentuation (19), est prévu un réseau correcteur du temps de propagation de groupe (12 ou 18) pour la zone de fréquence du signal à large bande non modulé, grâce à quoi des sauts de signal, à la sortie du filtre de pré-accentuation (13), en particulier des sauts noir/blanc ou blanc/noir, peuvent être rendus symétriques (fig. 3) et grâce à quoi on peut obtenir un facteur de relevage plus élevé »G« (üG > u) pour le filtre de pré-accentuation (13), facteur qui est déterminé par la zone de fréquence de transfert (f max à f min des fig. 2 et 3) de l'appareil d'enregistrement/reproduction (16).

2. Dispositif selon la revendication 1, caractérisé par le fait que le circuit correcteur du temps de propagation de groupe est un circuit »passe-tout« (12, 18).

3. Dispositif selon les revendications 1 et 2, caractérisé par le fait que, comme »passe-tout« (12, 18), est prévu au moins un étage à transistor (TA) en principe symétrique, avec montage en pont à réactance et résistance active (C, L et R), entre émetteur et collecteur.

4. Dispositif selon les revendications 1 à 3, caractérisé par le fait que la correction du temps de propagation de groupe du circuit »passe-tout« (12, 18) est efficace sur toute la zone de transfert du système enregistrement/reproduction de signal, en particulier de 0 à 3 MHz.

5. Dispositif selon les revendications 1 à 4, caractérisé par le fait que le circuit »passe-tout« (12, 18) est formé essentiellement d'un montage série de plusieurs circuits en parallèle LC (Ca/La, CbLb, CcLc, CeLe), sous forme de réactances et d'une résistance active (Rd).

6. Dispositif selon une ou plusieurs des revendications 1 à 5, caractérisé par le fait que les circuits de pré-accentuation (désaccentuation) ont une fonction de transfert selon l'égalité suivante:

$$F_{P(D)}(p) = K_{P(D)} \frac{1 + 2D_{1(2)}\dfrac{P}{W1(2)} + \left(\dfrac{p}{W1(2)}\right)^2}{1 + 2D_{2(1)}\dfrac{p}{W2(1)} + \left(\dfrac{p}{W2(1)}\right)^2}$$

où

$F_{P(D)}(p)$   est la fonction de transfert,
$K_{P(D)}$     est une constante,
$D1, D2$   sont des facteurs d'amortissement,
$W1, W2$ sont les pulsations des fréquences limites $f_1$ et $f_2$.

7. Dispositif selon l'une ou plusieurs des revendications 1 à 6, caractérisé par le fait que des étages de filtres, prévus dans le canal d'enregistrement (AK) et le canal de reproduction (WK), sont inclus, au moins partiellement, dans le circuit correcteur du temps de propagation de groupe (12, 18).

8. Dispositif selon l'une ou plusieurs des revendications 1 à 7, caractérisé par le fait que le circuit correcteur du temps de propagation de groupe (12, 18) provoque un retard du signal d'une durée qui correspond à un circuit retard usuel pour la compensation du temps de propagation, en particulier entre des signaux couleur et luminance séparés les uns des autres.

FIG.1

FIG.2a

FIG.2b

FIG.3

FIG.4

FIG.5

FIG.6

FIG.7